Europäisches Patentamt

European Patent Office

Office européen des brevets

(19)

(11) Veröffentlichungsnummer: **0 243 785**
**A2**

(12) # EUROPÄISCHE PATENTANMELDUNG

(21) Anmeldenummer: 87105514.1

(51) Int. Cl.⁴: **B60C 25/06**

(22) Anmeldetag: 14.04.87

(30) Priorität: 30.04.86 DE 3614738
01.04.87 DE 8704808 U

(43) Veröffentlichungstag der Anmeldung:
04.11.87 Patentblatt 87/45

(84) Benannte Vertragsstaaten:
FR GB IT SE

(71) Anmelder: **WEILNHAMMER Maschinenbau GmbH**
**Esterndorf 102**
**D-8250 Dorfen-Stadt 1(DE)**

(72) Erfinder: **Weilnhammer, August**
**Esterndorf 102**
**D-8250 Dorfen 1(DE)**

(74) Vertreter: **Schieschke, Klaus, Dipl.-Ing. et al**
**Patentanwälte Dipl.-Ing. E. Eder Dipl.-Ing. K.**
**Schieschke Elisabethstrasse 34**
**D-8000 München 40(DE)**

(54) **Verfahren und Vorrichtung zur Montage bzw. Demontage eines Vollreifens oder eines Luftreifens.**

(57) Die Erfindung bezieht sich auf ein Verfahren und eine Vorrichtung zur Montage bzw. Demontage eines Vollreifens oder eines Luftreifens, insbesondere für Nutzfahrzeuge, auf bzw. von einer Felge, wobei der Reifen gegen mindestens ein Widerlager gedrückt wird und Verschlußteile angebracht bzw. entfernt werden. Erfindungsgemäß wird bei unveränderter Horizontallage der Felge der Reifen von der Felge abgezogen bzw. auf die Felge aufgebracht. Hierbei sind an einer Stahlplatte 10 und/oder an einer Hubeinheit 3 in den Bereich der Felge einschwenkbare Montageelemente 12, 13 angeordnet, welche z.B. als Doppelschwingen ausgebildet sind und jeweils einen schaufelartigen Preßfinger 14 aufweisen.

FIG. 1

EP 0 243 785 A2

## Verfahren und Vorrichtung zur Montage bzw. Demontage eines Vollreifens oder eines Luftreifens

Die Erfindung bezieht sich auf ein Verfahren und eine Vorrichtung zur Montage bzw. Demontage eines Vollreifens oder eines Luftreifens, insbesondere für Nutzfahrzeuge, auf bzw. von einer Felge, wobei der Reifen gegen mindestens ein Widerlager gedrückt wird und Verschlußteile angebracht bzw. entfernt werden.

Als allgemeiner Stand der Technik sind bereits sogenannte Plattenpressen für den Wechsel von Vollreifen (Superelastikreifen) auf mehrteiligen, ringgeteilten Felgen unter Verwendung von sogenannten Montagekörben bekannt. Nachteilig ist hierbei, daß das gewichtsmäßig schwere Rad um 180 Grad gedreht werden und der schwere Montagekorb je Reifenwechsel zweimal auf den Reifen gehoben werden muß. Zudem müssen die losen Teile der Felge (Verschlußring, Seitenring und Schrägschulterring) durch die Speichen des Montagekorbes hindurch mittels Montiereisen herausgehebelt werden, was zeit-und kostenaufwendig ist.

Diese Plattenpressen finden auch Anwendung für den Wechsel von zylindrischen Stahlbandbandagen und zylindrischen, drahtarmierten Bandagen.

Mit diesen Plattenpressen ist jedoch kein Reifenwechsel von luftgefüllten Nutzfahrzeugreifen auf ringgeteilter 5-Grad-Schrägschulterfelge, von schlauchlosen Nutzfahrzeugreifen auf einteilige 15-Grad-Steilschulterfelge und von Landwirtschafts-und Mehrzweckreifen auf einteilige 5-Grad-Schrägschulter-Tiefbettfelge möglich. Damit ist der Anwendungsbereich dieses bekannten Systems neben den vorgenannten Nachteilen zudem begrenzt.

Weiterhin zählen zum bekannten Stand der Technik Klauenpressen mit zwei, vier oder sechs Klauen, welche für den Wechsel von hauptsächlich luftgefüllten Nutzfahrzeugreifen auf mehrteiligen, ringgeteilten 5-Grad-Schrägschulterfelgen dienen. Zum Wechseln von Vollreifen auf ringeteilten Felgen sind diese Klauenpressen nur bedingt geeignet für kleinere Reifen. Weiterhin müssen, wie bei der vorgenannten Plattenpresse, die losen Teile der Felge (Verschlußring, Seitenring und Schrägschulterring) mittels Montiereisen durch die Zwischenräume der Klauen hindurch herausgehebelt werden, was wiederum zeit-und kostenaufwendig ist.

Nicht gewechselt werden können mit diesen bekannten Klauenpressen schlauchlose Nutzfahrzeugreifen auf einteiliger 15-Grad-Steilschulterfelge, Landwirtschafts-und Mehrzweckreifen auf einteiliger 5-Grad-SchrägschulterTiefbettfelge sowie Stahlbandbandagen, aufgepreßt auf einen zylindrischen Radkörper.

Zum allgemein bekannten Stand der Technik zählen weiterhin hydraulisch arbeitende Reifenwechselmaschinen mit senkrechter Aufspannung des Rades auf einen angetriebenen Felgenspannkopf bei rotierendem Rad und feststehendem Montage-bzw. Demontagewerkzeug (feststehender Teller, Haken, Nase). Diese Reifenwechselmaschinen sind geeignet zum Wechseln von luftgefüllten Nutzfahrzeugreifen auf ringgeteilter 5-Grad-Schrägschulterfelge, schlauchlosen Nutzfahrzeugreifen auf einteiliger 15-Grad-Steilschulterfelge und Landwirtschafts-und Mehrzweckreifen auf einteiliger 5-Grad-Schrägschultertiefbettfelge. Es ist jedoch nachteiligerweise kein Wechsel möglich von Vollreifen auf mehrteiligen, ringgeteilten Felgen sowie von Stahlbandagen und drahtarmierten Bandagen, aufgepreßt auf zylindrische Radkörper.

Auch Reifenwechselmaschinen mit waagrechter Aufspannung des Rades, mechanisch oder hydraulisch angetriebenem Radspannkopf, rotierendem Rad sowie feststehenden Montage-und Demontagewerkzeugen zählen zum allgemein bekannten Stand der Technik. Auch hier ist die Anwendbarkeit bezüglich einzelner Reifen wie vorstehend beschrieben beschränkt.

Zum Stand der Technik zählen darüber hinaus Reifenmontiermaschinen mit waagrechter Aufspannung des Rades, feststehendem Rad und rotierendem Montagewerkzeug. Diese Maschinen sind geeignet zum Wechseln von schlauchlosen Nutzfahrzeugreifen auf 15-Grad-Steilschulterfelge; teilweise kann bei diesen Maschinen der Reifenwulst nicht von den Felgenhörnern losgedrückt werden und es ist zusätzlich ein eigenes Abdrückgerät erforderlich oder das Rad muß vorher z.B. unter eine 4-Klauen-Presse gebracht werden. Damit ergibt sich ein erheblicher Montage-bzw. Demontageaufwand. Weiterhin können mit diesen bekannten Maschinen Landwirtschafts-und Mehrzweckreifen auf einteiliger 5-Grad-Schrägschultertiefbettfelge gewechselt werden, was ebenfalls montageaufwendig ist.

Nicht gewechselt werden können mit diesen bekannten Maschinen luftgefüllte Nutzfahrzeugreifen auf mehrteiligen, ringgeteilten 5-Grad-Schrägschulterfelgen, Vollreifen auf mehrteiligen, ringgeteilten 5-Grad-Schrägschulterfelgen, Stahlbandbandagereifen und drahtarmierte Bandagen auf zylindrischen Radkörpern sowie luftgefüllte Reifen von Erdbewegungsmaschinen auf mehrteiligen ringgeteilten Felgen.

Bei den Erstausrüstern, d.h. den Kraftfahrzeugwerken, finden weiterhin teilweise vollautomatische Montiereinrichtungen Anwendung, welche jedoch nur für die Montage und nur für eine Reifenart geeignet sind.

Als Stand der Technik, von dem die vorliegende Erfindung ausgeht, ist eine Vorrichtung zur Montage bzw. Demontage von Vollreifen auf bzw. von Felgen bekannt (DE-PS 32 04 765). Hier findet eine stationär horizontal angeordnete ebene Stahlplatte großer Biegesteifigkeit mit einer den Außendurchmesser des Seitenringes der Felge übersteigenden Öffnung als Widerlager sowie eine Lagerung für die Felge auf einer vertikal wirkenden Hubeinrichtung Anwendung. Diese bekannte Vorrichtung ist für die Montage bzw. Demontage von Vollreifen auf mehrteiligen, ringgeteilten Felgen sowie für die neuen Vollreifen mit Haltenase (Klammerreifen) auf mehrteiliger Felge sowie für Bandagen geeignet.

Nicht montiert werden können schlauchlose Nutzfahrzeugreifen auf einteiliger 15-Grad-Steilschulterfelge sowie Landwirtschafts-und Mehrzweckreifen auf einteiliger 5-Grad-Schrägschulter-Tiefbettfelge.

Zum Stand der Technik ist zusammenfassend festzustellen, daß bisher Reifenservice-Stationen allein für den Nutzfahrzeugreifenbereich mindestens zwei oder mehr Maschinen anschaffen mußten, um die meisten am Markt befindlichen Arten und Größen von Reifen wechseln zu können. Nachteilig war hierbei der hohe Kapitaleinsatz bei ungenügender Auslastung, der große Flächenbedarf durch Aufstellung mehrerer Maschinen sowie der hohe Arbeitsaufwand durch Einsatz von z.B. zwei verschiedenen Maschinen für einen Reifentyp oder bei anderen Maschinen durch Wenden des Rades um 180 Grad und zweimaligem Preßvorgang.

Aufgabe der vorliegenden Erfindung ist es, ein Verfahren und eine Vorrichtung der eingangs genannten Art zu schaffen, welche so gestaltet sind, daß ein wesentlich wirtschaftlicherer Reifenwechsel ermöglicht wird, wobei mit Hilfe der Vorrichtung der weitaus überwiegende Teil aller am Markt befindlichen Nutzfahrzeugreifenarten und Reifengrößen demontiert bzw. montiert werden können.

Diese Aufgabe wird erfindunggemäß dadurch gelöst, daß bei unveränderter Horizontallage der Felge der Reifen von der Felge abgezogen bzw. auf die Felge aufgebracht wird. Die Vorrichtung zur Durchführung des Verfahrens ist mit auf Trägern einer stationär horizontal angeordneten ebenen Stahlplatte großer Biegefestigkeit mit einer auf die Felge abgestellten Öffnung als Widerlager versehen und mit einer vertikal wirkenden, mit einer Lagerung für die Felge versehenen Hubeinheit. Erfindungsgemäß sind an der Stahlplatte und/oder an der Hubeinheit in den Bereich der Felge einschwenkbare Montageelemente angeordnet, welche beispielsweise als zwei einander gegenüberliegende, an der Unterseite der Stahlplatte gelagerte Doppelschwingen ausgebildet sein können, wobei jeweils die der Felge benachbarte Schwinge im unteren Bereich mit einem schaufelartigen Preßfinger versehen ist.

Hierdurch ergibt sich der Vorteil, daß ein Wenden des Reifens bei der Demontage bzw. Montage nicht mehr erforderlich ist, wobei zudem der weitaus größte Teil aller auf dem Markt befindlichen Reifenprodukte im Nutzfahrzeugbereich von einer Felge demontiert bzw. auf eine Felge montiert werden können. Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:

Fig. 1 eine Seitenansicht der erfindungsgemäßen Vorrichtung ohne Reifen und Felge;

Fig. 2 eine Draufsicht auf die Vorrichtung nach Fig. 1;

Fig. 3 einen Schnitt nach der Linie III-III in Fig. 2;

Fig. 4, 5 die Montage bzw. Demontagemöglichkeit von luftgefüllten, schlauchlosen oder mit Schlauch versehenen Nutzfahrzeugreifen auf mehrteiliger, ringgeteilter 5-Grad-Schrägschulterfelge (Flachbett oder Halbtiefbett);

Fig. 6, 7 die Montage bzw. Demontage eines Vollreifens mit Hilfe der erfindungsgemäßen Vorrichtung;

Fig. 8, 9 die Montage bzw. Demontage eines schlauchlosen Nutzfahrzeugreifens auf 15-Grad-Steilschulterfelge mit Hilfe der erfindungsgemäßen Vorrichtung;

Fig. 10, 11 die Montage bzw. Demontage eines schlauchlosen Nutzfahrzeugreifens in einer anderen Ausgestaltung der Erfindung;

Fig. 12 den Wechsel einer Stahlbandbandage auf zylindrischem Radkörper mit Hilfe der erfindungsgemäßen Vorrichtung;

Fig. 13 eine weitere Ausführungsform der Erfindung in schematischer Seitanansicht in Arbeitsstellung;

Fig. 14 die Ausführungsform nach Fig. 13 in Ruhestellung.

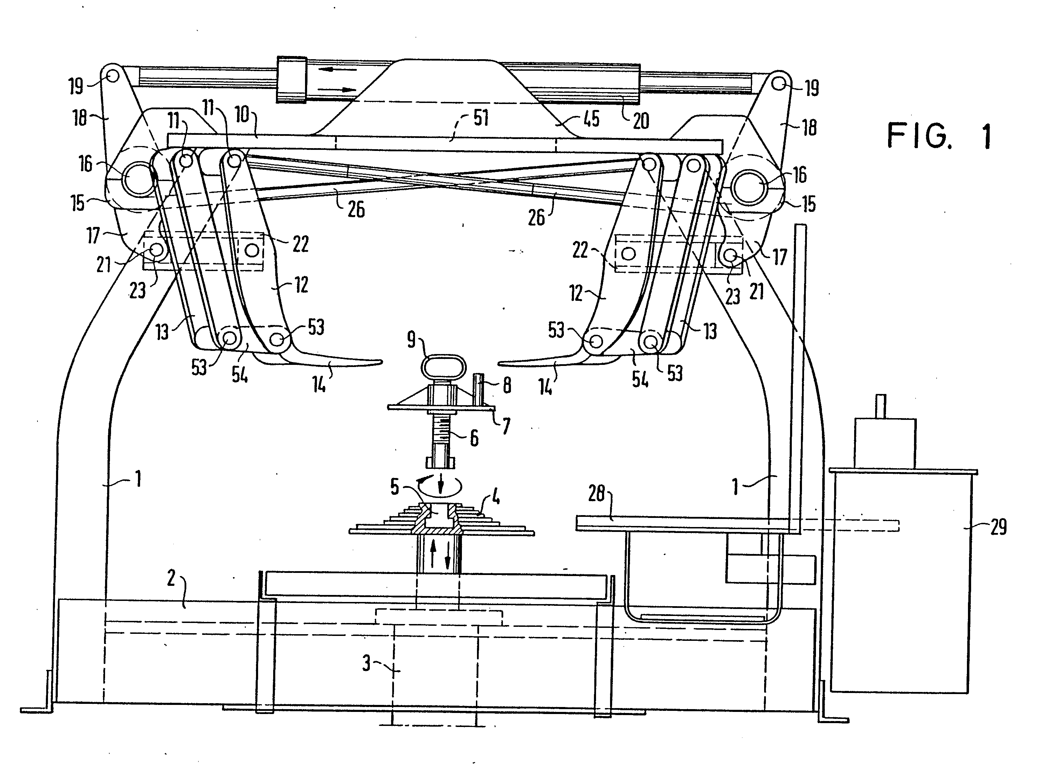

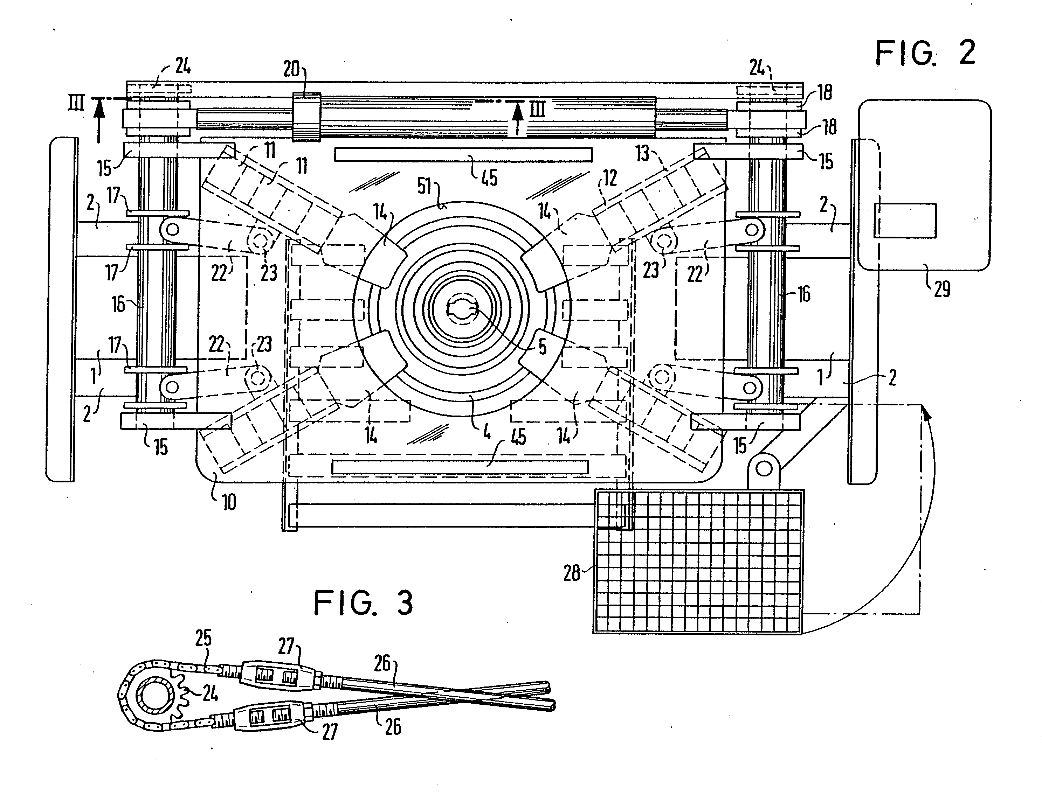

Die erfindungsgemäße Vorrichtung besteht nach Fig. 1 und 2 aus einem Pressenrahmen mit gebogenen, oben nach innen zulaufenden Trägern 1, einer Untertraverse 2, in deren Mittelpunkt eine doppelt wirkende, im Fußboden versenkte Kolben-Zylinder-Einheit als Hubvorrichtung 3 mit einer aufmontierten Stufenscheibe 4 widerstandsfähig gegen Zug und Druck verschraubt ist.

Axial im Mittelpunkt der Stufenscheibe 4 ist eine Aussparung 5 eingearbeitet, etwa in Form eines Doppelbartschlüssellochs. In dieser Aussparung 5 kann ein Gewindebolzen 6 mit aufgeschraubtem Druckteller 7 und Kurbelgriff 8 sowie Haltegriff 9 eingeführt und durch eine Drehung um 90Grad gegen Anschlag so fixiert werden, daß die vorgenannte Verbindung die volle Rückzugskraft der Hubvorrichtung 3 aufnehmen kann. Durch diese Vorrichtung ist es möglich, zu montierende Radfelgen sehr schnell maschinenseitig auszuzentrieren und sicher gegen hohe Abzugskräfte zu spannen.

An den beiden einander gegenüberliegenden, nach oben eingezogenen Trägern 1 ist im oberen Bereich eine Stahlplatte 10 befestigt, welche mittig eine kreisrunde Öffnung 51 zentrisch zur Mittelachse der Hubvorrichtung 3 aufweist. Der Durchmesser der Öffnung 51 ist etwas größer als der Außendurchmesser der größten, in der Vorrichtung zur Montage bzw. Demontage vorgesehenen, ringgeteilten Radfelge von Vollreifen. In diese Öffnung 51 können Übergangsringe mit geringerem Innendurchmesser für die jeweils im Außendurchmesser kleineren Radfelgen eingehängt werden.

Die Stahlplatte 10 ist oberseitig mit zwei einander gegenüberliegenden Verstärkungsrippen 45 versehen, welche dieser an sich dünnen Stahlplatte hohe Biegesteifigkeit verleihen.

Unterhalb der Stahlplatte 10 sind als Montageelemente vier Doppelschwingen angeordnet. Jede dieser Doppelschwingen besteht aus einer vorderen Schwinge 12 und einer hinteren Schwinge 13. Beide Schwingen sind über Lagerstellen 11 gelenkig mit der Stahlplatte 10 verbunden. Die Koppel jeder Doppelschwinge mit den Schwingen 12 und 13 ist im vorderen Bereich als schaufelartiger Preßfinger 14 gestaltet, wobei diese schaufelartigen Preßfinger in den Bereich der zu montierenden bzw. demontierenden Felge einschwenken können.

Die schaufelartiegn Preßfinger 14 sind so gestaltet, daß sie hohe Biegesteifigkeit aufweisen. Diese Preßfinger 14 haben eine ausgeprägte, dem Reifen angepaßte Form, deren Länge so bemessen ist, daß Nutzfahrzeugreifen nicht nur von oben gepreßt, sondern auch von unten von der Felge abgezogen werden können, ohne daß der Reifenwulst umstülpt. Über Gelenkverbindungen 53 ist die Koppel 54, welche im vorderen Bereich den schaufelartigen Preßfinger 14 aufweist, mit den beiden Schwingen 12 und 13 jeder Doppelschwinge verbunden.

Der Antrieb jeder Doppelschwinge erfolgt über eine Antriebslasche 22, welche nach Fig. 1 und 2 vorzugsweise mit der vorderen Schwinge 12 verbunden ist.

An zwei gegenüberliegenden Rändern der Stahlplatte 10 sind vier geteilte Drehlager 15 angeordnet. In den Drehlagern 15 sind drehbar zwei Wellen 16 mit nach unten stehenden Schenkeln 17 und nach oben stehenden Schenkeln 18 gelagert. An dem Gelenk 19 greift eine doppelt wirkende Kolben-Zylinder-Einheit 20 an. Die unteren Schenkel 17 sind jeweils über einen Gelenkpunkt 21 verbunden, welcher seinerseits den Gelenkpunkt für die Antriebslasche 22 bildet.

Die Kraftübertragung von den Gelenkpunkten 21 zu den Innenschwingen 12 jeder Doppelschwinge erfolgt damit über die Antriebslaschen 22, welche als zwei übereinanderliegende Teile ausgebildet sind, deren Enden in acht Kardanköpfen 23 allseitig drehbar aufgehängt sind.

Für den mechanischen Gleichlauf der Wellen 16 sind jeweils an deren Enden Kettenräder 24 nach Fig. 2 und 3 torsionssteif befestigt. Über den Umfang dieser Kettenräder 24 laufen zwei Rollenketten 25 hoher Zugfestigkeit, an deren Enden Zugstangen 26 befestigt sind.

Nach Fig. 3 überkreuzen sich die Zugstangen 26 und kehren damit die Drehrichtung der beiden Wellen 16 um, wodurch eine absolut funktionsrichtige Offen-und Schließbewegung der Doppelschwingen und damit der Preßfinger 14 gewährleistet ist. Zur zentrischen Feineinstellung der schaufelartigen Preßfinger 14 sind in den Zugstangen Spannschlösser 27 nach Fig. 3 integriert.

Aus Fig. 1 geht hervor, daß die Träger 1 des Pressenrahmens nach innen zulaufend gebogen sind, um im unteren Bereich des Pressenrahmens eine hohe Ständerweite zu erreichen; in diesem Bereich werden Räder der größeren Durchmesser, z.B. von Erdbewegungsmaschinen oder Traktorantriebsräder ummontiert.

Im oberen Bereich des Pressenrahmens sind über den schaufelartigen Preßfingern 14 und innerhalb der Schwingen 12 der Doppelschwingen diejenigen Räder zum Wechseln vorgesehen, welche konstruktiv kleinere Durchmesser haben. Hierdurch ist es möglich, die Träger 1 im oberen Bereich nach innen zu ziehen und für die Stahlplatte 10 einen kürzeren Aufhängeabstand zu schaffen, was bewirkt, daß die Stahlplatte 10 infolge des aus dem kürzeren Aufhängeabstand resultierenden kleineren Biegemoments relativ dünnwandig ausgeführt werden kann.

Zum Montieren bzw. Demontieren von Verschluß-, Schrägschulter-und Seitenringen von mehrteiligen Felgen durch die kreisrunde Öffnung 51 der Stahlplatte 10 von oben ist seitlich am Pressenständer ein Bedienungspodest 28 nach Fig. 1 und 2 vorgesehen, das um 90 Grad geschwenkt werden kann, um beim Arbeiten innerhalb des Pressenständers mit den schaufelartigen Preßfingern 14 nicht hinderlich zu sein.

Der Antrieb der Hubvorrichtung 3 mit ihrer Kolben-Zylinder-Einheit und der Antrieb der Kolben-Zylinder-Einheit 20 erfolgt über ein Hydraulikaggregat 29 unter Zwischenschaltung von Schieberventilen.

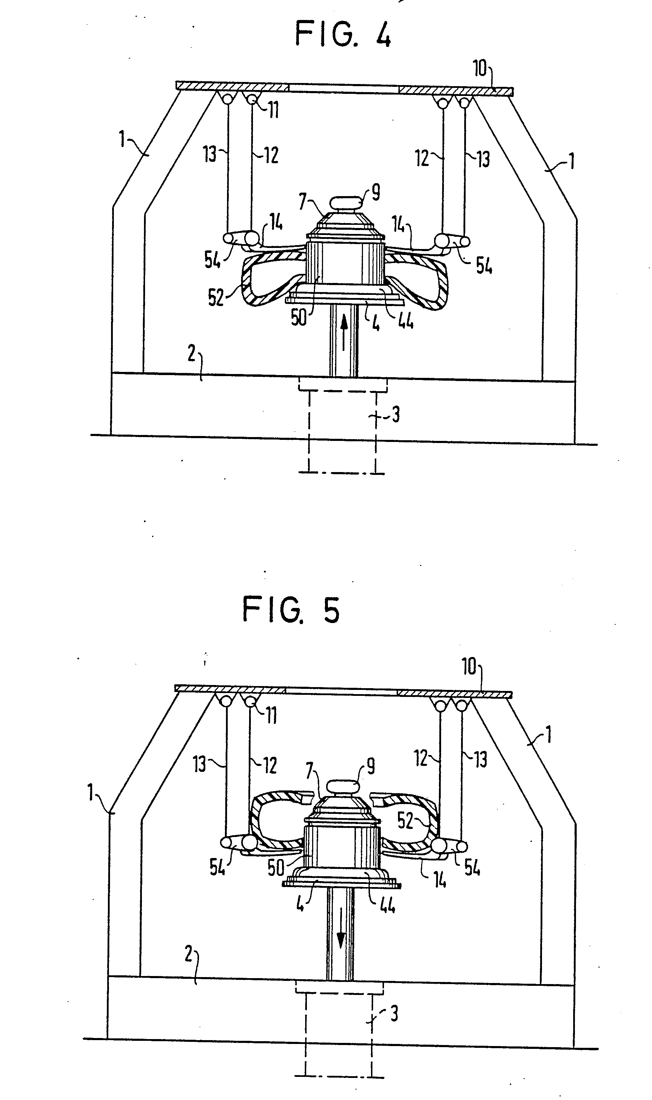

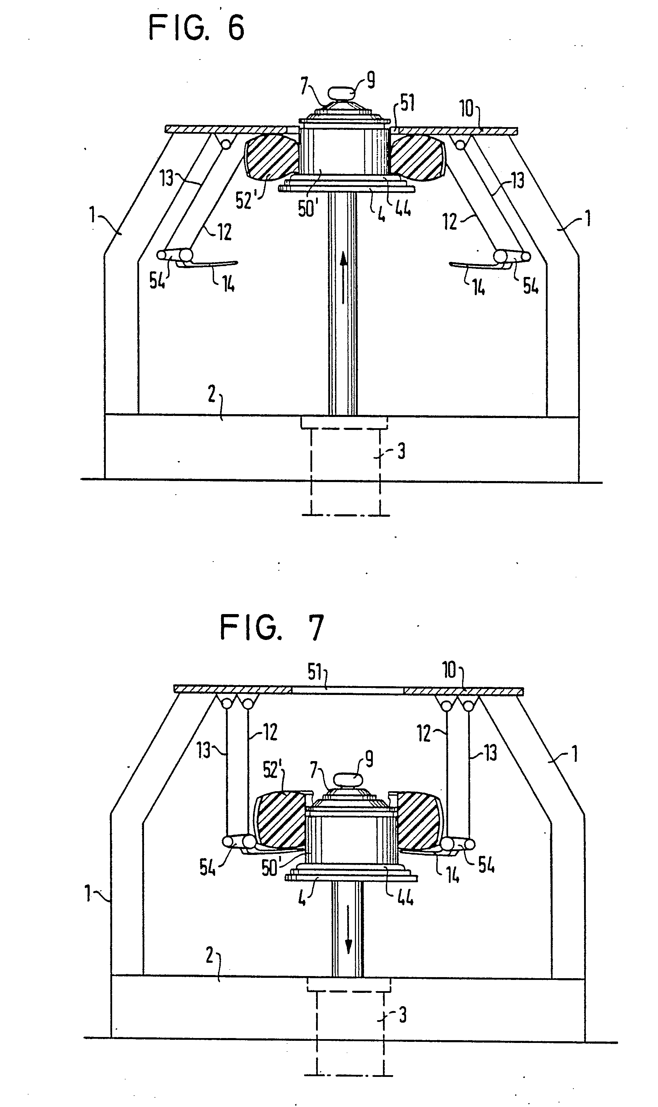

In Fig. 4 und 5 ist die erfindungsgemäße Vorrichtung in Seitenansicht schematisch dargestellt zum Wechseln von luftgefüllten ,schlauchlosen oder mit Schlauch versehenen Nutzfahrzeugreifen auf mehrteiliger, ringgeteilter 5-Grad-Schrägschulterfelge (Flachbett oder Halbtiefbett).

Das Rad mit dem Schlauch 52 und der Felge 50 wird mit der Verschlußringseite nach oben auf die Stufenscheibe 4 gelegt und über den Druckteller 7, den Kurbelgriff 8, den Haltegriff 9 und den Gewindebolzen 6 über den Bajonettverschluß durch Einschieben und Drehen gesichert und eingespannt. Die Felge mit ihrem festen Felgenhorn 44 stützt sich damit auf der Stufenscheibe 4 ab Eine mögliche Verformung der Felgenschüssel bei Montage bzw. Demontage ist damit ausgeschlossen..

Die Doppelschwingen mit ihren Schwingen 12 und 13 werden nach Fig. 4 in den Bereich der Seitenwandungen des Reifens 52 mit Hilfe der in Fig. 1 und 2 dargestellten Antriebsvorrichtung über die Kolben-Zylinder-Einheit 20 eingeschwenkt. Die Hubvorrichtung 3 preßt nunmehr die obenliegenden Reifenwulste gegen die schaufelartigen Preßfinger, wodurch im oberen Bereich ein Freiraum entsteht. Die losen Teile der Felge, d.h. die Verschlußringe, können damit herausgenommen werden.

Nunmehr wird wiederum die Kolben-Zylinder-Einheit 20 betätigt und die vier Doppelschwingen zurückgezogen. Damit kann nach Fig. 5 durch Betätigung der Hubvorrichtung 3 die Felge 50 angehoben werden. Danach werden die Doppelschwingen 12 und 13 wiederum nach Fig. 5 eingeschwenkt und greifen nunmehr an der anderen Seite an der Seitenfläche des Reifens 52 an.

Nunmehr bewegt sich die Hubvorrichtung 3 nach unten, wodurch nach Fig. 5 der Reifen 52 von der Felge 50 abgezogen wird. Der Reifen bleibt damit auf den schaufelartigen Preßfingern 14 liegen und ist vollständig von der Felge 50 getrennt. Ein neuer Reifen wird auf den Felgenrand gelegt. Durch Öffnen der schaufelartigen Preßfinger über die Doppelschwingen fällt der Altreifen auf den Neureifen und kann problemlos aus der Vorrichtung entnommen werden. Der Neureifen wird dann ggf. nach Einlegen eines Schlauchs mit Hilfe der zugestellten Preßfinger 14 nach unten gedrückt und die Verschlußringen können mittels eines konischen Weitungsrings aufgepreßt werden.

Der gesamte Reifenwechsel ist damit ohne Wenden des Rades durch die unter den Reifen greifenden Preßfinger 14 mit Hilfe der Doppelschwingen 12 und 13 möglich.

Wie aus Fig. 2 ersichtlich, sind die Preßfinger 14 mit den Doppelschwingen 12 und 13 in einer Kreisaufteilung von zwei mal 60 Grad und zwei mal 120 Grad angeordnet. Es besteht in nicht näher dargestellter Ausgestaltung der Erfindung auch die Möglichkeit, daß die Anordnung vier mal 90 Grad betragen kann.

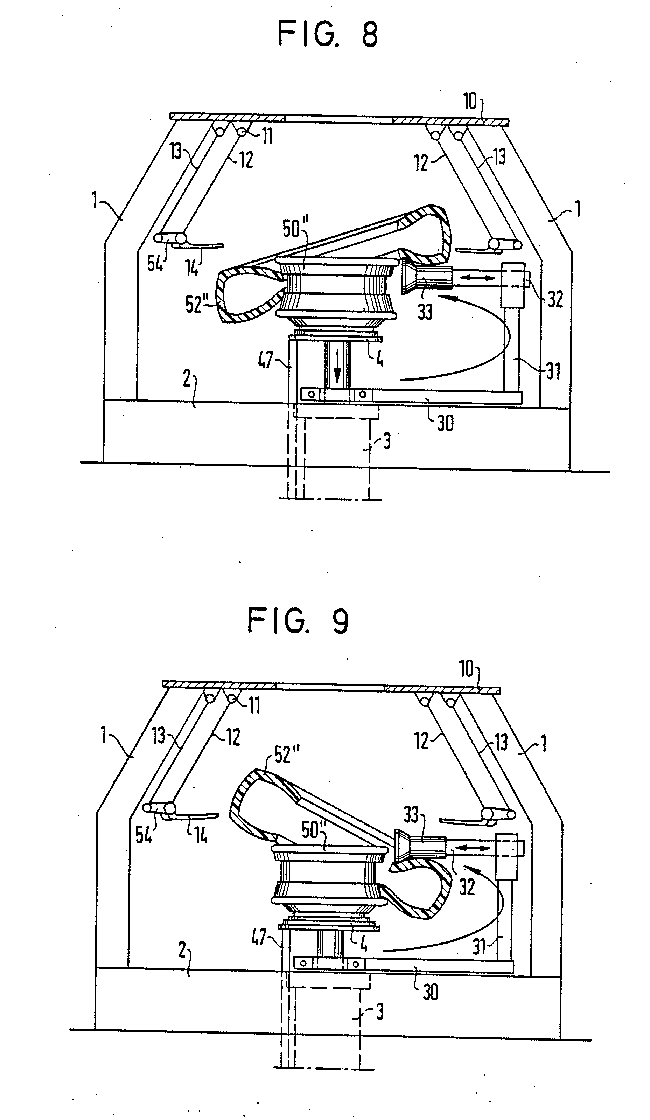

In Fig. 6 und 7 ist der Wechselvorgang eines Vollreifens mit der erfindungsgemäßen Vorrichtung dargestellt. Da ein Vollreifen zum Herausnehmen der Verschlußringe mit hohem Druck am besten gegen eine Ringfläche gepreßt werden muß, erfolgt dieser Vorgang bequem von oben durch die kreisrunde Öffnung 51 der Stahlplatte 10 bei geöffneten Doppelschwingen 12, 13 mit herausgefahrenen - schaufelartigen Preßfingern 14, wie in Fig.1 dargestellt. Die Abstützung der Felge 50'erfolgt wegen der hohen Drücke wiederum außen am festen Felgenhorn 44 auf der Stufenscheibe 4, wobei die Befestigung des Rades auf der Stufenscheibe 4 über den Druckteller 7 wie bei dem in Fig. 4 und 5 beschriebenen Montage-bzw. Demontagevorgang erfolgt.

Nach dem Entfernen der Verschlußringe (lose Teile der Felge) werden die schaufelartigen Preßfinger 14 auf den Felgendurchmesser über die Kolben-Zylinder-Einheit 20, die Wellen 16 und die Antriebslaschen 22 zusammengefahren, wobei nach Fig. 7 die Felge 50' durch Herabbewegen der Hubvorrichtung 3 aus dem Altreifen 52 herausgezogen wird.

Der Neureifen wird unter die kreisrunde Öffnung 51 der Stahlplatte 10 gelegt und durch Hochfahren der Hubvorrichtung zusammengepreßt, wodurch die Verschlußringe montiert werden können. Damit kann durch die erfindungsgemäße Vorrichtung auch der Wechsel der bekanntermaßen extrem schwierig zu montierenden Reifenart trotz hohen Gewichts ohne Wenden erfolgen.

In Fig. 8 und 9 ist die Montage bzw. Demontage eines schlauchlosen Nutzfahrzeugreifens 52" auf 15-Grad-Steilschulterfelge 50" beschrieben. Zu diesem Zweck ist zentrisch um die Hubvorrichtung 3 ein Ausleger 30 gelagert, welcher wahlweise durch eine Kolben-Zylinder-Einheit, einen Hydraulikmotor oder einen Elektrogetriebemotor entweder eine 180-Grad-oder eine 360-Grad-Drehung ausführen kann.

Auf dem Ausleger 30 ist ein senkrechter Ständer 31 aufgesetzt, an dessen oberem Ende axial drehbar und radial zum Reifen 52" verschiebbar ein Arm 32 mit einer Rolle 33 angeordnet ist. Die Rolle 33 kann gegen ein Hakenwerkzeug oder einen Teller ausgetauscht werden.

Der Wechsel eines 15-Grad-Steilschulterreifens 52" von der Felge 50" geht wie folgt vor sich: Das Rad wird auf die Stufenscheibe 4 aufgespannt und die Rolle 33 auf den Durchmesser der Felge 50"

eingestellt durch radiale Verschiebung des Arms 32. Die Hubvorrichtung 3 preßt den oberen Wulst des Reifens 52″ von der Felgenschulter durch Drehen des Auslegers 30 um die zentrische Achse der Hubvorrichtung 3.

Danach wird die Rolle 33 ausgeschwenkt und das Rad bei geöffneten schaufelartigen Preßfingern 14 so weit angehoben, daß die Rolle 33 nach Einschwenken unter dem Reifen 52″ in Position kommt. Durch Rückzug der Hubvorrichtung 3 und eine 180-Grad-Drehung des Auslegers 30 wird der Reifen 52″ ganz demontiert, wie in Fig. 8 dargestellt ist.

Die Rolle 33 wird ausgeschwenkt und ein neuer Reifen schräg auf das obere Felgenhorn gelegt. Durch Hochfahren der Hubvorrichtung 3 und eine Drehung um 180 Grad des Auslegers 30 werden beide Reifenwulste in einem Arbeitsgang montiert.

Wiederum kann damit ein Reifenwechsel erfolgen, ohne daß das Rad gewendet werden muß, wobei über die Rolle 33, den Arm 32 und den drehbaren Ausleger 30 der betreffende Wulst des Reifens 52″ von der Felge gelöst werden kann und der Altreifen herausgehoben sowie der Neureifen aufgesetzt wird.

Es ist auch möglich, daß der Arm 32 mit der Rolle 33 stationär angeordnet und nur in den Wirkungsbereich eingeschwenkt wird, wobei sich die Hubeinrichtung 3 dreht.

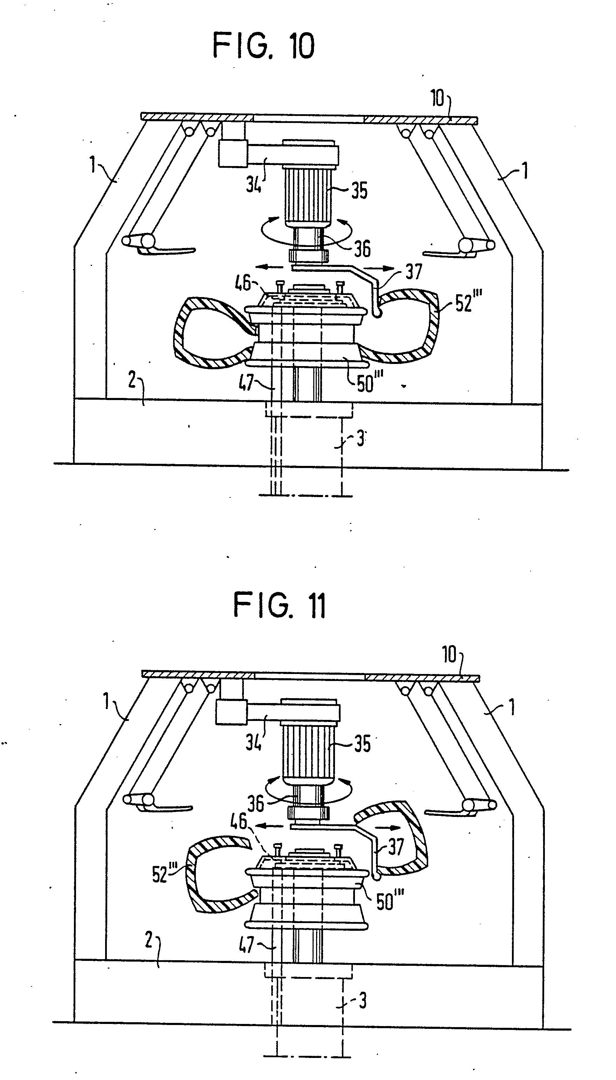

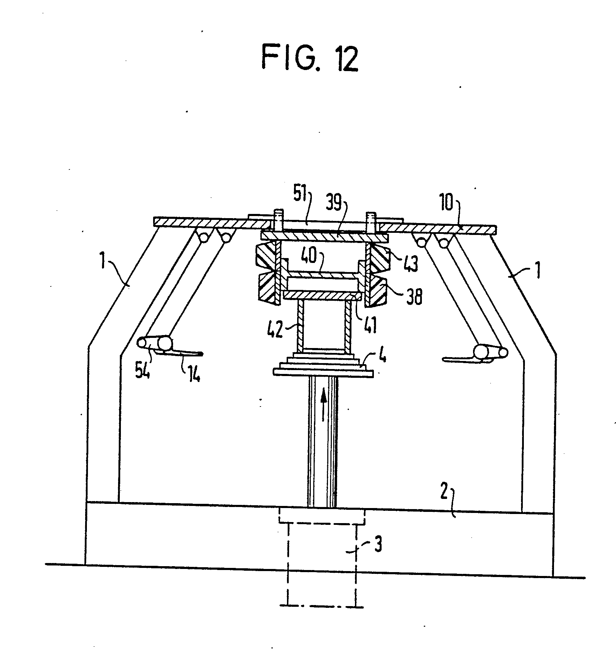

In Fig. 10 und 11 ist eine weitere Ausführungsmöglichkeit der Erfindung dargestellt, welche ersatzweise oder zusammen mit der in Fig. 8 und 9 dargestellten Vorrichtung zur Ausführung kommen kann. Hierbei ist am äußeren Rand der Stahlplatte 10 ein Schwenkarm 34 drehbar gelagert, an dessen Ende eine Antriebseinheit 35 mit verlängerter zentrischer Welle 36 angebracht ist. Die Antriebseinheit 35 kann aus einem Elektrogetriebemotor oder aus einem Hydraulikmotor bestehen.

Am unteren Ende der zentrischen Welle 36 ist eine Steckaufnahme für ein abgewinkeltes Montagewerkzeug 37 vorgesehen, welches horizontal verschiebbar und damit auf den jeweiligen Felgendurchmesser einstellbar ist.

In Fig. 10 und 11 ist die Montage beispielsweise eines Landwirtschaftsreifens 52‴ mit Schlauch auf einer Tiefbettfelge 50‴ oder eines Schlauchlosreifens auf 15-Grad-Steilschulterfelge dargestellt. Der Abpreßvorgang der Reifenwulst von den Felgenschultern erfolgt hierbei über die -schaufelartigen Preßfinger 14 der Doppelschwingen 12, 13. Danach greift das Montagewerkzeug 37 nach Fig. 10 ein und löst durch Drehen um die zentrische Welle 36 einen Teil des Reifens 52‴ von der Felge 50‴. Der andere Rand des Reifens 52‴ wird nach Fig. 11 auf gleiche Weise durch das Montagewerkzeug 37 von der Felge 50‴ getrennt.

Nach einer anderen, nicht näher dargestellten Ausführungsform kann der Motor 35 entfallen und das Montagewerkzeug 37 feststehen, während die Hubvorrichtung 3 drehbar ausgebildet ist.

Fig. 12 zeigt den Wechsel einer Stahlbandbandage auf zylindrischem Radkörper. Hierzu sind für den Abpreßvorgang einer Altbandage 38 sehr hohe Drücke erforderlich. Zu diesem Zweck wird unter der kreisrunden Öffnung 51 in der Stahlplatte 10 eine biegesteife Stahlplatte 39 eingehängt. Auf eine weitere, dem jeweiligen Radkörper 40 angepaßte Stahlplatte 41 wird das Rad aufgesetzt. Zwischen die Stufenscheibe 4 und die Stahlplatte 41 wird ein Distanzstück 42 (Rohr oder Rohrstempel) zwischengelegt. Eine neue Bandage 43 wird zentrisch auf die Altbandage 38 gelegt und dient dabei als Abpreßring.

Durch Drücken mit der Hubvorrichtung 3 gegen die Stahlplatte 39 wird in einem Vorgang die Altbandage 38 ab-und die Neubandage 43 aufgepreßt. Soweit es die Kapazität der Vorrichtung erlaubt, können mehrere Neubandagen auf mehrere Altbandagen gelegt und in einem Vorgang gewechselt werden.

Durch die vorliegende Erfindung ist es vorteilhafterweise möglich, ohne Wenden des Reifens folgende Reifen von Felgen zu demontieren bzw. auf Felgen montieren zu können:

-Vollreifen aus Gummi-bzw. Kunststoffmischungen (Superelastikreifen) auf mehrteiligen ringgeteilten 5-Grad-Schrägschulterfelgen.

-von Vollreifen aus Gummi-bzw. Kunststoffmischungen der neuen Generation mit Haltenase, d.h. sogenannten Klammerreifen,

-von herkömmlichen Luftreifen für Nutzfahrzeuge diagonaler oder radialer Bauart, schlauchlos oder mit Schlauch auf mehrteiligen ringgeteilten 5-Grad-Schrägschulterfelgen bis 12.000 mm-Reifenaußendurchmesser einschließlich Reifen für Mehrzweckverwendung,

-von Landwirtschafts-und Mehrzweckreifen auf einteiliger 5-Grad-Schrägschulter-Tiefbettfelge,

-von schlauchlosen 15-Grad-Steilschulterreifen auf einteiliger Felge bei ruhendem, festgehaltenem Rad ggf. nur mit einer 180-Grad-Drehung des entsprechenden Montagewerkzeugs,

-von Stahlbandbandagereifen, aufgepreßt auf einen zylindrischen Radkörper.

Damit ergibt sich ohne Wenden des betreffenden Rades ein sehr wirtschaftlicher Demontage-bzw. Montagevorgang.

In weiterer, nicht näher dargestellter Ausgestaltung der Erfindung kann zur Beschickung der erfindungsgemäßen Vorrichtung mit Rädern ein Rollentisch oder eine pneumatische oder hydraulische Kipp-oder Hebevorrichtung angebracht werden. Weiterhin sind pneumatische Reifenheber oder Drückeinrichtungen zum Anliften des Reifens einsetzbar.

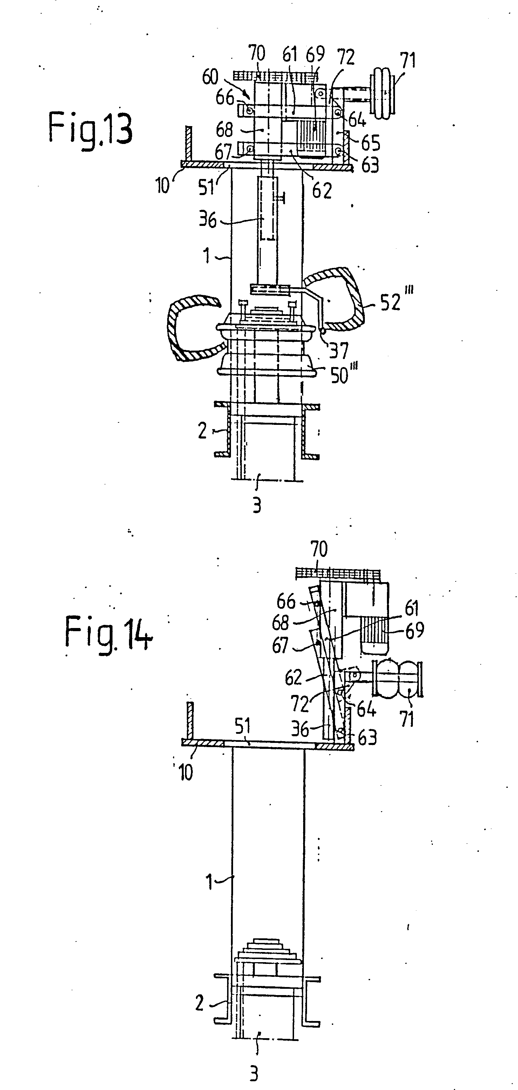

Nach Fig. 13 und 14 besteht in weiterer Ausführungsmöglichkeit der Erfindung die Vorrichtung aus einem Pressenrahmen mit Trägern 1, und einer Untertraverse 2, in deren Mittelpunkt eine doppelt wirkende, im Fußboden versenkte Hubkolbenzylindereinheit als Hubvorrichtung 3 mit einer Lagerung verschraubt ist. An den Trägern 1 ist im oberen Bereich eine Stahlplatte 10 befestigt, welche mittig eine kreisrunde Öffnung 51 zentrisch zur Mittelachse der Hubvorrichtung 3 aufweist. Der Durchmesser der Öffnung 51 ist etwas größer als der Außendurchmesser der größten, in der Vorrichtung zur Montage bzw. Demontage vorgesehenen, ringgeteilten Radfelge von Vollreifen. In diese Öffnung 51 können Übergangsringe mit geringerem Innendurchmesser für die jeweils im Außendurchmesser kleineren Radfelgen eingehängt werden. Diese Montagemöglichkeit für Vollreifen ist bei der Stellung der Vorrichtung nach Fig. 24 gegeben.

Nach Fig. 13 erstreckt sich eine vertikal angeordnete Antriebswelle 36 durch die Öffnung 51 der Stahlplatte 10. Diese Antriebswelle 36 ist endseitig mit einem lösbaren Montageelement 37 für einen Reifen 52''' einer auf der Lagerung der Hubeinheit 3 angeordneten Felge 50''' versehen. Dieses Montageelement 37 ist beispielsweise als Montagefinger ausgebildet, welcher durch Drehung der Antriebswelle 36 um ihre Längsachse entlang den Reifenwülsten fährt und damit die Montage bzw. Demontage des Reifens gegenüber seiner Felge bewirkt.

Die Antriebswelle 36 ist mit einer Hebe-Schwenkvorrichtung 60 verbunden Diese Hebe-Schwenkvorrichtung 60 besteht aus zwei Parallelogrammlenkern 61 uns 62, deren hintere Gelenkpunkte 63 und 64 an einem senkrecht auf der Stahlplatte 10 angeordneten Lagerteil gelagert sind.

Die vorderen Gelenkpunkte 66 unf 67 der beiden Parallelogrammlenker sind durch einen Koppelteil 68 miteinander verbunden. Dieses Koppelteil 68 bildet die Lagerstelle für die Antriebswelle 36. Die Antriebswelle 36 ist über einen Kettentrieb 70 mit einem Antriebsmotor 69 verbunden, welcher gleichfalls an dem Koppelteil 68 der Hebe-Schwenkvorrichtung 60 gelagert ist. Der obere Lenker 61 der Hebe-Schwenkvorrichtung 60 ist über einen Hebelarm 72 mit einer Antriebsvorrichtung 71 verbunden, welche beispielsweise als Kolbenzylindereinheit oder als Luftfederbalg ausgebildet sein kann.

Ist die Montage bzw. Demontage des Reifens 52''' gegenüber der Felge 50''' beendet, so wird das Montageelement 37, welches an einer Hülse befestigt ist, nach Lösen einer Arretierung von der vorzugsweise als Vierkantwelle ausgebildeten Antriebswelle 36 abgezogen. Nunmehr kann durch Betätigen des Luftfederbalges 71 die Hebe-Schwenkvorrichtung 60 im Uhrzeigersinn - schwenken, wobei sich die Position nach Fig. 2 ergibt. Es ist hier ersichtlich, daß die Antriebswelle 36 aus dem Bereich der Öffnung 51 der Stahlplatte 10 herausgeschwenkt ist, so daß keine Behinderung bei der Durchführung einer Montage bzw. Demontage eines Vollreifens im Zusammenwirken mit der Hubeinrichtung 3 gegeben ist.

Die gesamte Anordnung lagert nach Fig. 14 funktionssicher in der Ruhestellung, wobei die Antriebsvorrichtung 71 über den Hebelarm 72 sowie die beiden Parallelogrammlenker 61 und 62 das Koppelteil 68 haltern, an welchem die Antriebswelle 36 und der Motor 69 gelagert sind.

Soll die erfindungsgemäße Vorrichtung wieder zur Montage bzw. Demontage von 15°-Steilschulter-oder Tiefbettreifen dienen, so wird über die Antriebsvorrichtung 71 die Antriebswelle 36 aus der Ruhestellung nach Fig. 14 in die Arbeitsstellung nach Fig. 13 mit Hilfe der beiden Parallelogrammlenker 61 und 62 geschwenkt, wonach im vorderen Bereich der Antriebswelle 36 der Montagefinger 37 aufgeschoben und befestigt wird, so daß damit auf schnelle und einfache Weise die erfindungsgemäße Vorrichtung wiederum zur Montage der vorgenannten Steilschulter-oder Tiefbettreifen dienen kann.

**Ansprüche**

1. Verfahren zur Montage bzw. Demontage eines Vollreifens oder eines Luftreifens, insbesondere für Nutzfahrzeuge, auf bzw. von einer Felge, wobe der Reifen gegen mindestens ein Widerlager gedrückt wird und Verschlußteile angebracht bzw. entfernt werden, dadurch gekennzeichnet, daß bei unveränderter Horizontallage der Felge (50, 50'50'', 50''')der Reifen (52, 52', 52'', 5''') von der Felge abgezogen bzw. auf die Felge aufgebracht wird.

2. Vorrichtung zur Durchführung des Verfahrens nach Anspruch 1, mit auf Trägern einer stationär horizontal angeordneten ebenen Stahlplatte großer Biegefestigkeit, mit einer auf die Felge abgestellten Öffnung als Widerlager und mit einer vertikal wirkenden, mit einer Lagerung für die Felge versehenen Hubeinheit, dadurch gekennzeichnet, daß an der Stahlplatte (10) und/oder an der Hubeinheit (3) in den Bereich der Felge einschwenkbare Montageelemente (12, 13; 33; 37) angeordnet sind.

3. Vorrichtung nach Anspruch 2, dadurch gekennzeichnet, daß die Montageelemente mindestens zwei einander gegenüberliegende, an der Unterseite der Stahlplatte (10) gelagerte Doppelschwingen (12, 13) sind, wobei jeweils die der Felge benachbarte Schwinge (12) im unteren Bereich mit einem schaufelartigen Preßfinger (14) versehen ist.

4. Vorrichtung nach Anspruch 3, dadurch gekennzeichnet, daß an der Unterseite der Stahlplatte (10) vier gemeinsam ein-und ausschwenkbare Doppelschwingen (12, 13) gelagert sind.

5. Vorrichtung nach Anspruch 4, dadurch gekennzeichnet, daß neben der Stahlplatte (10) zwei horizontal liegende, gegenläufig angetriebene Wellen (16) angeordnet sind, welche jeweils über Zwischenelemente (17, 21, 22, 23) mit einer Schwinge (12) jeder Doppelschwinge (12, 13) verbunden sind.

6. Vorrichtung. nach Anspruch 5, dadurch gekennzeichnet, daß der gegenläufige synchrone Antrieb der Wellen (16) über eine Kolben-Zylinder-Einheit (20), Kettenräder (24), Rollenketten (25) und sich kreuzende Zugstangen (26) erfolgt.

7. Vorrichtung nach Anspruch 6, dadurch gekennzeichnet, daß die Zugstangen (26) mit Spannschlössern (27) versehen sind.

8. Vorrichtung nach Anspruch 6, dadurch gekennzeichnet, daß der Antrieb der Wellen (16) seitlich neben der Stahlplatte (10) angeordnet ist.

9. Vorrichtung nach einem der vorhergehenden Ansprüche, dadurch gekennzeichnet, daß die die Stahlplatte (10) halternden Träger(1) im oberen Bereich eingezogen sind.

10. Vorrichtung nach Anspruch 2, dadurch gekennzeichnet, daß die Lagerung für die Felge eine Stufenscheibe (4) ist, welche mit einer zentrischen Spannvorrichtung für die Felge versehen ist.

11. Vorrichtung nach Anspruch 10, dadurch gekennzeichnet, daß die Stufenscheibe (4) eine Verdrehsicherung (46, 47) aufweist.

12. Vorrichtung nach Anspruch 10, dadurch gekennzeichnet, daß die zentrische Spannvorrichtung ein horizontaler Drehteller (7) mit Gewindebolzen (6) und einem in die Stufenscheibe (4) einsetzbaren Bajonettverschluß ist.

13. Vorrichtung nach einem der vorhergehenden Ansprüche, dadurch gekennzeichnet, daß zentrisch um die Hubvorrichtung (3) als Montageelement ein horizontal umlaufender Ausleger (30) angeordnet ist, welcher über einen Ständer (31) mit einem axial drehbaren und radial verschiebbaren Arm (32) mit einem die Seitenfläche eines Reifens beaufschlagbaren Element verbunden ist (Fig. 8,9).

14. Vorrichtung nach Anspruch 13, dadurch gekennzeichnet, daß das am Arm (32) befestigte Element eine Rolle (33) ist.

15. Vorrichtung nach einem der vorhergehenden Ansprüche, dadurch gekennzeichnet, daß an der Unterseite der Stahlplatte (10) ein Schwenkarm (34) horizontal drehbar gelagert ist, welcher über eine vertikale, zentrische Welle (36) mit einer Aufnahme für ein den Reifen beaufschlagbares Montageelement (37) verbunden ist (Fig. 10, 11).

16. Vorrichtung nach Anspruch 2, dadurch gekennzeichnet, daß in der Öffnung (51) der Stahlplatte (10) eine biegesteife Stahlplatte(39) befestigbar ist und daß auf die Hubvorrichtung (3) zentrisch ein auf den Innendurchmesser einer Felge abgestelltes Distanzstück befestigbar ist (Fig. 12).

17. Vorrichtung nach einem der vorhergehenden Ansprüche, dadurch gekennzeichnet, daß neben der Stufenscheibe (4) ein Rolltisch, eine Hebe- und Kippvorrichtung oder eine Druckeinrichtung angeordnet sind.

18. Vorrichtung nach einem der vorhergehenden Ansprüche, dadurch gekennzeichnet, daß die Hubvorrichtung (3) und die Kolben-Zylinder-Einheit (20) mit einer Hydrauliksteuervorrichtung (29) verbunden sind.

19. Vorrichtung nach einem der vorhergehenden Ansprüche, dadurch gekennzeichnet, daß sich in Arbeitsstellung eine vertikal angeordnete Antriebswelle (36) durch die Öffnung (51) der Stahlplatte (10) erstreckt,

daß die Antriebswelle (36) endseitig mit einem lösbaren Montageelement (37) für einen Reifen (52''') einer auf der Lagerung der Hubeinheit (3) angeordneten Felge (50''') versehen ist und

daß die Antriebswelle (36) mit einer Hebe-Schwenkvorrichtung (60) verbunden und oberhalb der Stahlplatte (10) versetzt zu deren Öffnung (51) in Ruhestellung eingeschwenkt ist.

20. Vorrichtung nach Anspruch 19, dadurch gekennzeichnet, daß die Hebe-Schwenkvorrichtung (60) aus zwei Parallelogrammlenkern (61, 62) besteht, deren hintere Gelenkpunkte (63, 64) in einem senkrecht auf der Stahlplatte (10) angeordneten Lagerteil (65) gelagert sind und deren vorderen Gelenkpunkte (66, 67) durch ein Koppelteil (68) verbunden sind, welches die Lagerstelle für die Antriebswelle (36) bildet.

21. Vorrichtung nach Anspruch 19 und 20. dadurch gekennzeichnet, daß an dem Koppelteil (68) ein Antriebsmotor (69) für die Antriebswelle (36) gelagert ist.

22. Vorrichtung nach Anspruch 21, dadurch gekennzeichnet, daß die Antriebswelle (36) mit dem Antriebsmotor (69) über einen Kettentrieb (70) verbunden ist.

23. Vorrichtung nach den Ansprüchen 20 bis 22, dadurch gekennzeichnet, daß mindestens einer der Parallelogrammlenker mit einer Antriebsvorrichtung (71) verbunden ist.

24. Vorrichtung nach Anspruch 23, dadurch gekennzeichnet, daß der obere Lenker (61) des Parallelogrammlenkers über einen Hebelarm (72) mit der Antriebsvorrichtung (71) verbunden ist.

25. Vorrichtung nach Anspruch 24, dadurch gekennzeichnet, daß die Antriebsvorrichtung (71) eine Kolbenzylindereinheit oder ein Luftfederbalg ist.

FIG. 1

FIG. 2

FIG. 3

0 243 785

FIG. 4

FIG. 5

0 243 785

# FIG. 6

# FIG. 7

# FIG. 8

# FIG. 9

## FIG. 10

## FIG. 11

FIG. 12

Fig.13

Fig.14